Europäisches Patentamt

European Patent Office

Office européen des brevets

(19)

(11) Veröffentlichungsnummer: **0 141 877**
**B1**

(12) EUROPÄISCHE PATENTSCHRIFT

(45) Veröffentlichungstag der Patentschrift: **25.05.88**

(21) Anmeldenummer: **83111498.8**

(22) Anmeldetag: **17.11.83**

(51) Int. Cl.⁴: **G 05 D 23/30**, G 05 D 23/02, F 24 D 19/10

(54) Thermostatventil.

(43) Veröffentlichungstag der Anmeldung:
**22.05.85 Patentblatt 85/21**

(45) Bekanntmachung des Hinweises auf die
Patenterteilung:
**25.05.88 Patentblatt 88/21**

(84) Benannte Vertragsstaaten:
**AT BE CH DE FR GB IT LI NL SE**

(56) Entgegenhaltungen:
**EP-A-0 068 478
DE-A-1 798 294
GB-A- 313 916**

(73) Patentinhaber: **Honeywell-Braukmann GmbH
Hardhofweg
D-6950 Mosbach/Baden (DE)**

(72) Erfinder: **Vollmer, Rudolf, Dipl.-Ing.
Fr. Hölderlinstrasse 23
D-6950 Mosbach (DE)**

(74) Vertreter: **Rentzsch, Heinz et al
Honeywell Europe S.A. Holding KG
Kaiserleistrasse 55 Postfach 184
D-6050 Offenbach am Main (DE)**

EP 0 141 877 B1

Courier Press, Leamington Spa, England.

## Beschreibung

Die vorliegende Erfindung bezieht sich auf ein Thermostatventil nach dem Gattungsbegriff des Anspruches 1.

Zur individuellen Einzelraum-Temperaturregelung dienen bislang nicht nur manuell einstellbare Heizkörperthermostaten, sondern es ist auch bereits bekannt, über örtliche oder zentral angeordnete Schaltuhren bzw. Programmsteuerungen eine Zonensteuerung vorzugeben, indem auf den Temperaturfühler des Heizkörperventils entsprechend eingewirkt wird. Heizt man z.B. über eine Heizwicklung den Temperaturfühler auf oder bringt man in der Nähe des Temperaturfühlers einen Heizwiderstand an, z.B. wie aus DE—A—1,798,294 bekannt, so kann man das thermostatbetätigte Heizkörperventil schließen, wenn die Steuerung einen entsprechenden Heizstrom durch die Heizwicklung bzw. den Heizwiderstand schickt. Alle bekannten Zonensteuerungen benötigen daher eine elektrische Energiezufuhr zu dem Thermostatventil, was eine gesonderte Verlegung einer Netzleitung oder wenigstens einer Niederspannungsleitung erfordert. Es ist auch bereits bekannt, die Steuerung in Form eines Mikroprozessors in den Thermostatventilkopf zu integrieren. Aber auch bei dieser Lösung ist über einen Transformator ein Anschluß an die Netzspannung erforderlich und die Aufheizung des Temperaturfühlers erfolgt wiederum elektrisch.

Aus EP—A1—0,068,478 ist bekannt, ein Thermostatventil so auszubilden, daß dem Temperaturfühler des Ventils eine erhöhte Temperatur vorgegeben werden kann, ohne daß diese erhöhte Temperatur aus einer elektrischen Hilfsenergie konstant erzeugt werden muß. Bei diesem bekannten Thermostatventil weist ein den Ausdehnungskörper umgebendes Gehäuse mehrere durch einen Schieber verschließbare Luftdurchtrittsöffnungen auf. Dieses Gehäuse ist über einen Wärmeleitsteg mit dem Heizwasserzulauf wärmeleitmäßig verbunden. Hierbei erfolgt die Regelung über den Schieber mittels seines batteriegespeisten Antriebes, während die Ventilverstellung mittels der Energie bewirkt wird, die aus dem Heizwasserzulauf entnommen wird.

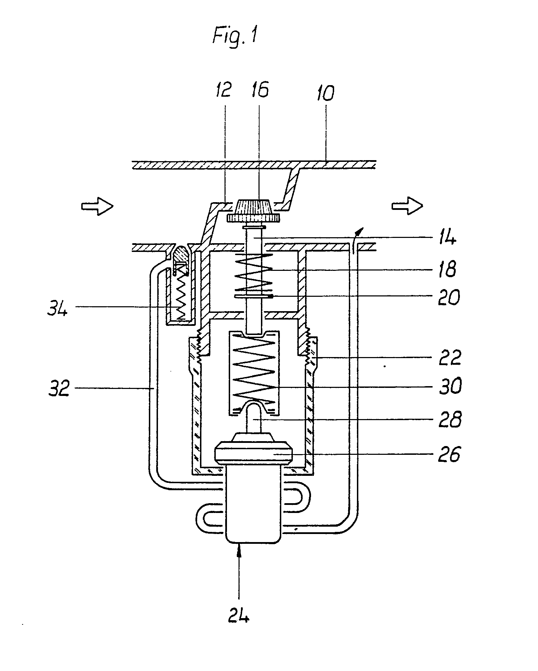

Der Oberbegriff von Anspruch 1 ist aus GB—A—313 916 bekannt. Die in Fig. 1 dort dargestellte Heizvorrichtung zeigt die Steuerung eines Ventils über einen Außentemperaturfühler, wobei hinter dem Ventil eine Abzweigleitung angeschchlossen ist, über die nur bei geöffnetem Ventil der Außentemperaturfühler eine zusätzliche Heizung erfährt. Bei sehr heißem Dampf wirkt diese unterlagerte Regelung derstalt, daß beispielsweise in den vorderen Wagen eines zuges, wo der Dampf noch sehr heiß ist, eine überheizung vermieden wird, während in den hinteren Wagen durch eine größere öffnung des Ventils der abnehmenden Wärme des Dampfes Rechnung getragen wird.

Die Aufgabe der vorliegenden Erfindung liegt darin, die für die Erhöhung der Temperatur des Temperaturfühlers erforderliche Energie dem Heizkreislauf über eine Abzweigleitung (Bypass) derart zu entnehmen, daß die elektrische Hilfsenergie lediglich für einen Schaltvorgang benötigt wird.

Die Lösung dieser Aufgabe gelingt gemäß den kennzeichnenden Merkmalen des Patentanspruches 1. Weitere vorteilhafte Ausgestaltungen der Erfindung sind den Unteransprüchen entnehmbar.

Anhand eines in den Figuren der beiligenden Zeichnung dargestellten Ausführungsbeispieles sei im folgenden die Erfindung näher erläutert. Es zeigen:

Fig. 1 wesentliche Elemente eines Ausführungsbeispieles der erfindungsgemäßen Thermostatventilsteuerung;

Fig. 2 eine mit einem herkömmlichen Thermostatventil kombinierbare Steuer- und Beeinflussungseinheit von der Seite betrachtet und teilweise geschnitten;

Fig. 3 eine Vorderansicht der Anordnung gemäß Fig. 2;

Fig. 4 eine perspektivische Ansicht der Steuer- und Beeinflussungseinheit; und

Fig. 5 und 6 Einzelheiten eines Pilotventils.

Gemäß Fig. 1 ist in einem Thermostatventil-Unterteil 10 ein Ventilsitz 12 angeordnet. Eine Ventilspindel 14 ist abgedichtet aus dem Unterteil 10 herausgeführt und trägt an ihrem in das Unterteil 10 hineinragenden Ende einen Schließkörper 16. Eine Feder 18 stützt sich einerseits an dem Unterteil 10 und andererseits an einem mit der Ventilspindel 14 verbundenen Anschlag 20 ab, wodurch das Ventil 12/16 normalerweise in der Offenstellung gehalten wird. Mit dem Unterteil 10 ist ein Oberteil 22 verschraubt. Ein Temperaturfühler 24 stützt sich mit seinem Gehäuse 26 in dem Oberteil 22 ab, wobei sein Arbeitskolben 28 sich über ein elastisches Zwischenglied 30 an der Ventilspindel 14 abstützt. Soweit das Thermostatventil bis hierher beschrieben wurde, ist, dieses herkömmlicher Bauart und braucht daher in seiner Funktion nicht näher erläutert zu werden. Im Prinzip kann jedes bekannte Thermostatventil hier Anwendung finden.

Gemäß der Erfindung ist eine Abzweigleitung (Bypass) 32 an das Unterteil 10 oder auch an den Heizungskreislauf vor und hinter dem Unterteil angeschlossen. Wesentlich ist lediglich, daß die Abzweigleitung vor und hinter dem Ventil 12/16 angeschlossen ist. Ferner ist in der Abzweigleitung 32 ein Pilotventil 34 angeordnet, über welches der Durchgang des Heizmittels durch die Abzweigleitung 32 geöffnet und gesperrt werden kann. Die Abzweigleitung 32 ist an dem Temperaturfühler 24 vorbeigeführt, so daß bei geöffnetem Pilotventil 34 ein Wärmeaustausch stattfindet und der Temperaturfühler 24 aufgeheizt wird und das Ventil 12/16 schließt.

Der Anschluß der Abzweigleitung 32 in der dargestellten Weise ist nicht zwingend erforderlich. Vielmehr kann eine Blende, d.h. eine Verengung in dem Rohrstrang oder in dem Unterteil 10 angeordnet werden, so daß eine Druckdifferenz zwischen dem Raum vor und hinter der Blende erzeugt wird.

Die Abzweigleitung 32 kann dann an den Raum vor und hinter der Blende angeschlossen werden. Diese Lösung ergibt zugleich einen Frostschutz, da in diesem Fall ein minimaler Durchfluß durch das Ventil 12/16 erforderlich ist, um den Druckabfall zu erzeugen.

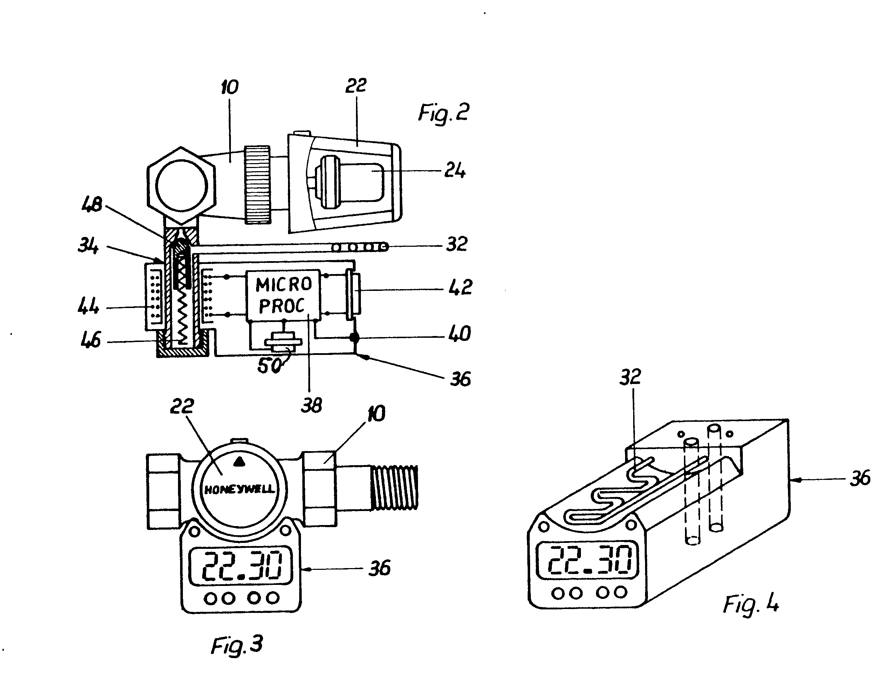

Gemäß den Figuren 2 bis 4 ist die Abzweigleitung 32 unterhalb des Thermostatventils 10, 22 angeordnet, so daß die aufsteigende Warmluft durch Schlitze im Oberteil 22 auf den Temperaturfühler 24 einwirken kann.

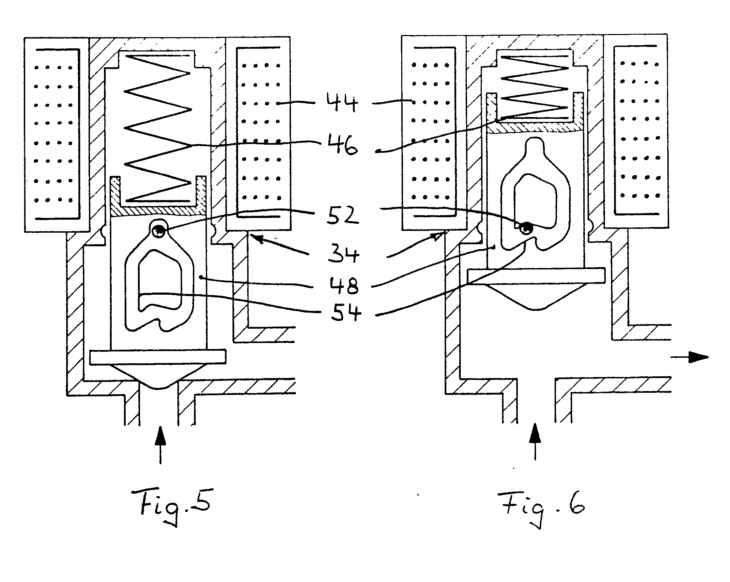

Ein an das Unterteil 10 anflanschbarer Modul 36 enthält eine programmierbare Steuerung in Form eines Mikroprozessors 38, eine Spannungsversorgung mittels eingebauter Batterien 50, bestimmte Bedien- und Programmierelemente 40 und eine Digitaluhr 42. Der Mikroprozessor 38 steuert eine Magnetspule 44, welche auf einen durch eine Feder 46 in der Schließstellung gehaltenen Kolben 48 einwirkt und bei Erregung diesen in die Offenstellung bringen kann. Wie man Fig. 5 entnimmt, wird bei einer kurzzeitigen Erregung der Magnetspule 44 der als Kern ausgebildete Kolben 48 in diese hineingezogen. Ein gehähausefester Stift 52 greift durch eine Kulissenbahn 54 in dem Kolben 48, so daß bei einer nachfolgenden Entregung der Magnetspule 44 der Kolben 48 die in Fig. 6 gezeigte Öffnungsstellung einnimmt. Es bedarf daher keiner Energie, um den Kolben 48 in der Öffnungsstellung zu halten.

Wenn der Mikroprozessor 38 ein Schließen des Pilotventils 34 befiehlt, wo wird erneut die Magnetspule 44 kurzzeitig erregt. Hierdurch wird der sich in der Öffnungsstellung befindliche Kolben 48 zusätzlich ein Stück angehoben, so daß über den Stift 52 und die Kulisse 54 der Kolben 48 nach Entregung der Magnetspule 44 bedingt durch die Feder 46 wieder die Schließstellung gemäß Fig. 5 einnimmt. Die durch die Kulisse 54 und den Stift 52 bewirkte Steuerung beihaltet eine geringe Drehbewegung des Kolbens 48.

**Patentansprüche**

1. In einem Heizungskreislauf angeordnetes Thermostatventil (10, 22) mit einer Steuerung (36) zur programmierbaren Betätigung des Ventils (12, 16) durch Vorgabe einer erhöhten Temperatur für den Temperaturfühler (24) des Ventils (12, 16), wobei die erhöhte Temperatur dem Heizungskreislauf entnommen wird und die Steuerung (36) lediglich die Zufuhr der erhöhten Temperatur zu dem Temperaturfühler (24) schaltet, und mit einer an den Heizungskreislauf angeschlossenen Abzweigleitung (32), die sich in Wärmeaustausch mit dem Temperaturfühler (24) des Ventils (12, 16) befindet, dadurch gekennzeichnet, daß in der Abzweigleitung (32) ein von der Steuerung (36) betätigtes Pilotventil (34) angeordnet ist, über welches der Durchgang des Heizmittels durch die Abzweigleitung geöffnet oder gesperrt wird und daß die Abzweigleitung (32) vor und hinter dem Ventilsitz (12) an den Heizungskreislauf angeschlossen ist, wodurch eine Bypassleitung in bezug auf diesen Ventilsitz (12) gebildet wird.

2. Thermostatventil nach Anspruch 1, dadurch gekennzeichnet, daß eine Blende im Heizungskreislauf angeordnet ist und die Abzweigleitung (32) an den Heizungskreislauf vor und hinter der Blende angeschlossen ist.

3. Thermostatventil nach Anspruch 1, dadurch gekennzeichnet, daß das Pilotventil (34) einen durch eine Feder (46) in Schließstellung vorgespannten kolbenförmigen Schließkörper (48) aufweist und daß Mittel (52, 54) vorgesehen sind, um den Schließkörper (48) in der Offenstellung zu verriegeln.

4. Thermostatventil nach Anspruch 3, gekennzeichnet durch eine von der Steuerung (36) ansteuerbare Magnetspule (44) zur Betätigung des Schließkörpers (48) des Pilotventils (34).

5. Thermostatventil nach Anspruch 4, dadurch gekennzeichnet, daß die Steuerung (36) einen batteriegespeisten Mikroprozessor (38) aufweist.

6. Thermostatventil nach Anspruch 5, dadurch gekennzeichnet, daß der Mikroprozessor (38), das spulenbetätigte Pilotventil (34) und die Abzweigleitung (32) eine an das Ventil-Unterteil (10) unterhalb des Ventil-Oberteils (22) anflanschbare Baueinheit (36) bilden.

7. Thermostatventil nach Anspruch 4, dadurch gekennzeichnet, daß der Schließkörper (48) des Pilotventils (34) mit einer Steuerkulisse (54) versehen ist, die mit einem Steuerstift (52) zusammenwirkt.

**Revendications**

1. Vanne thermostatique (10, 22) disposée dans un circuit de chauffage et comportant un dispositif de commande (36) servant à actionner de façon programmable la vanne (12, 16) au moyen d'une prédétermination d'une température élevée pour le capteur de température (24) de la vanne (12, 16), auquel cas la température élevée est prélevée du circuit de chauffage et le dispositif de commande (36) déclenche uniquement l'amenée de la température élevée au capteur de température (24), et comportant une canalisation de dérivation (32), qui est raccordée au circuit de chauffage et établit un échange thermique avec le capteur de température (24) de la vanne (12, 16), caractérisé en ce que dans la canalisation de dérivation (32) se trouve disposée une vanne pilote (34) qui est actionnée par le dispositif de commande (36) et par l'intermédiaire de laquelle la circulation du fluide chaud dans la canalisation de dérivation est autorisée ou bloquée, et en ce que la canalisation de dérivation (32) est raccordée, en amont et en aval du siège de vanne (12), au circuit de chauffage, ce qui forme une canalisation de dérivation par rapport à ce siège de vanne (12).

2. Vanne thermostatique selon la revendication 1, caractérisée en ce qu'un diaphragme est disposé dans le circuit de chauffage et que la canalisation de dérivation (32) est raccordée au circuit de chauffage en amont et en aval du diaphragme.

3. Vanne thermostatique selon la revendication 1, caractérisée en ce que la vanne pilote (34) comporte un organe de fermeture (48) en forme de piston, qui est précontraint dans la position de fermeture par un ressort (46), et en ce qu'il est prévu des moyens (52, 54) servant à verrouiller l'organe de fermeture (48) dans la position ouverte.

4. Vanne thermostatique selon la revendication 3, caractérisé par une bobine magnétique (44) pouvant être commandée par le dispositif de commande (36) et servant à actionner l'organe de fermeture (48) de la vanne pilote (34).

5. Vanne thermostatique selon la revendication 4, caractérisé en ce que le dispositif de commande (36) comporte un microprocesseur (38) alimenté par piles.

6. Vanne thermostatique selon la revendication 5, caractérisée en ce que le microprocesseur (38), la vanne pilote (34) actionnée par la bobine et la canalisation de dérivation (32) forment un module (36) pouvant être raccordé par brides à la partie inférieure (10) de la vanne, au-dessous de la partie supérieure (22) de cette dernière.

7. Vanne thermostatique selon la revendication 4, caractérisée en ce que l'organe de fermeture (48) de la vanne pilote (34) est muni d'une coulisse de commande (54) qui coopère avec une tige de commande (52).

**Claims**

1. Thermostatic valve (10, 22) arranged in a heating circulation comprising a control device (36) for a programmable actuation of the valve (12, 16) by providing an increased temperature for the temperature sensor (24) of the valve (12, 16), whereat the increased temperature is taken from the heating circulation and the control device (36) merely switches the transfer of the increased temperature to the temperature sensor, and further comprising a branch circuit (32) connected to the heating circulation and being in heat exchange with the temperature sensor (24) of the valve (12, 16), characterized in that a pilot valve (34) is provided in the branch circuit (32) and is switched by the control device (36) to open or block, respectively, the throughput of the heating fluid through the branch circuit and that the branch circuit (32) is connected to the heating circulation downstream and upstream of the valve seat (12) to form a bypass with respect to said valve seat (12).

2. Thermostatic valve according to claim 1, characterized in that an orifice plate is provided within the heating circulation and that the branch circuit (32) is connected to the heating circulation downstream and upstream of said orifice plate.

3. Thermostatic valve according to claim 1, characterized in that the pilot valve (34) comprises a piston-shaped closing body (48) biased into its closing position by a spring (46) and that means (52, 54) are provided in order to lock the closing body (48) in its opening position.

4. Thermostatic valve according to claim 3, characterized by a solenoid valve (44) controllable by said control device (36) for actuating the closing body (48) of the pilot valve (34).

5. Thermostatic valve according to claim 4, characterized in that the control device (36) comprises a battery powered microprocessor (38).

6. Thermostatic valve according to claim 5, characterized in that the microprocessor (38), the solenoid pilot valve (34) and the branch circuit (32) form a module (36) which is flanged to the lower part (10) of the valve below the upper part (22) of the valve.

7. Thermostatic valve according to claim 4, characterized in that the closing body (48) of the pilot valve (34) is provided with a slotted cam (54) acting together with a control pin (52).

Fig. 1

0 141 877

Fig.2

10  22

24

48
34
44
46

32

MICRO PROC

42

40

50

36

38

22  10

HONEYWELL

22.30

36

Fig.3

32

22.30

36

Fig.4

44

46

52

34

48

54

Fig.5

Fig.6